# EUROPEAN PATENT SPECIFICATION

(11) **EP 1 103 642 B1**
(45) Date of publication and mention of the grant of the patent: **24.03.2004**
(21) Application number: 00121307.3
(22) Date of filing: 06.10.2000
(51) Int. Cl.: D03D 47/34, H02K 33/16, H02K 7/08

(54) **Linear electric motor for actuating braking devices particularly for weaving loom and the like**
Elektrischer Linearmotor zur Betätigung von Bremsen insbesondere für Webmaschinen und dergleichen
Moteur linéaire électrique pour actionner les dispositifs de freinage en particulier pour les métiers à tisser et analogues

(30) Priority: 26.10.1999 IT TO990926
(43) Date of publication of application: 30.05.2001
(73) Proprietor: L.G.L. Electronics S.p.A., 24024 Gandino (Bergamo) (IT)
(72) Inventor: Castelli, Rosario, 24024 Gandino, (Prov. of Bergamo) (IT)
(74) Representative: Modiano, Guido, Dr.-Ing.

(56) References cited:
- EP-A- 0 972 734
- US-A- 4 761 340
- US-A- 5 776 600

## Description

The present invention relates to a linear electric motor for actuating braking devices for weaving looms and the like.

As it is known, a weft yarn is fed to weaving looms by unwinding the weft yarn from a spool arranged ahead of a weft yarn feeder from which the yarn is then sent to the weaving loom.

Typically, between the spool and the feeder and between the feeder and the loom electrically-actuated weft braking devices are provided, each of which is designed to modulate the mechanical tension of the yarn in order to adapt it to the weaving requirements.

The weft yarn feeder also is provided with its own means for the modulated braking of the yarn, which can be of the self-modulating type or of the type with electrically-actuated modulation.

Both the weft braking device and the yarn braking means with electrically-actuated modulation are actuated by actuators which are energized with a current modulated according to the modulation required for the braking action.

EP-A-0,972,734 (prior art according to Art. 54.3 EPC) discloses a linear electric motor for actuating weft braking devices particularly for weaving looms, comprising a motor shaft with associated radially-polarized cylindrical permanent magnets which move in a reciprocating manner in a corresponding cavity of a stator provided with excitation coils and guiding and supporting bushes for said motor shaft.

According to the inventions disclosed in EPA-00110982.6 and EPA-00110983.4 by the same Applicant, it is known to actuate weft braking devices and the braking means associated with the weft yarn feeder by means of linear electric motors which have a motor shaft made of nonmagnetic material, with associated radially-polarized cylindrical permanent magnets which move axially and reciprocatingly with respect to a stator supporting the excitation coils through which the modulated current flows.

Typically, the shaft of the linear motors is made of ceramic material and is guided and supported by a pair of bushes made of plastic material which are supported by the outer casing of the stator of the motor.

Such bushes made of plastics for guiding and supporting the shaft have proved to be subjected to intense wear which entails the development of plays, with the onset of friction and variations in the gap of the motor, leading to possible jamming and/or stoppages of the motor and, in any case, to considerable decreases in its efficiency.

This is a severe drawback of conventional linear motors, considering that in current textile machines it is necessary to ensure the efficiency and correctness of the shaft/bushing coupling at least for a few billion operating cycles and with speeds on the order of one meter per second in both directions of motion of the shaft.

The aim of the present invention is to eliminate the above severe drawback, and within the scope of this general aim an important object of the invention is to provide a linear motor of the specified type, provided with guiding and supporting bushes for the motor shaft which are capable of meeting such operating requirements, i.e. capable of withstanding, without appreciable wear, a number of cycles between 3.5 and 7.5·10⁹.

Within this aim, an object of the invention is to provide a linear motor with guiding and supporting bushes having an extremely simple structure which as such is economically advantageous notwithstanding the very high performance offered.

This aim and these and other objects which will become better apparent hereinafter are achieved with a linear electric motor, comprising a motor shaft with associated radially-polarized cylindrical permanent magnets which move in a corresponding cavity of a stator casing provided with excitation coils and guiding and supporting bushes for said motor shaft, characterized in that the guiding and supporting bushes are made of ceramic material and in that the motor shaft, at least in regions where it is in sliding contact with the bushes, is at least coated with one of the following materials: ceramic material, chromium, plasma, adapted to harden the surface of said shaft.

Typically, according to the invention, said ceramic material is selected among materials comprising at least aluminum oxide and zirconium oxide.

Each bush is preferably constituted by a body made of plastics, typically of the thermoplastic type, in which ceramic rings are partially embedded, the motor shaft being able to slide in said rings with a sliding coupling.

The characteristics, purposes and advantages of the improved motor according to the present invention will become better apparent from the following detailed description and with reference to the accompanying drawings, given by way of non-limitative example, wherein:

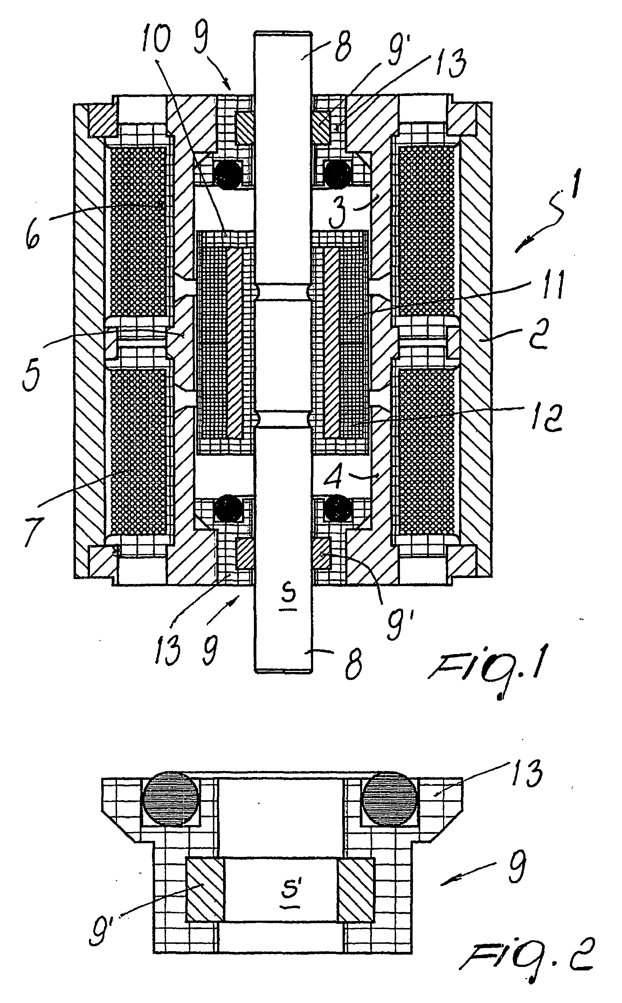

Figure 1 is an axial sectional view of an improved linear motor according to the present invention;
Figure 2 is an enlarged-scale view of a detail of Figure 1.

The drawings illustrate a linear motor 1 of a conventional type which comprises a hollow cylindrical stator 2 provided with at least two pole shoes 3 and 4 and preferably with a third pole 5 (which significantly improves the performance of the motor) and two excitation coils 6-7. A motor shaft 8 can slide with a reciprocating motion in a cavity of the rotor 2, is supported and guided by bushes 9 supported by the stator 2, and is provided with a supporting element 10 made of plastic material to which two cylindrical permanent magnets 11-12 (made for example of neodymium), magnetized radially and with opposite orientations, are rigidly coupled with an interposed cylindrical sleeve made of ferromagnetic material.

The shaft 8, at least in the regions in which it is in sliding contact with the bushes 9, is at least coated with, or made of one of the following materials: ceramic material, chromium, plasma, and the guiding and supporting bushes 9 of the shaft are both provided with rings 9' made of ceramic material. Typically, such ceramic material is constituted by zirconium oxide or aluminum oxide.

Preferably, the ceramic rings 9' are partially embedded in respective bush bodies 13 made of plastics, typically of the thermoplastic type, and the shaft 8 can slide in such rings with a very precise mutual sliding coupling. This is achieved by smoothing the outer surface S of the shaft 8 until it assumes a maximum roughness between 0.3 and 0.4 microns and by grinding the internal surface S' of the rings 9' until a maximum roughness of 1 micron is reached.

Without altering the concept of the invention, the details of execution and the embodiments may of course be altered extensively with respect to what has been described and illustrated by way of non-limitative example without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A linear electric motor (1) for actuating weft braking devices particularly for weaving looms, comprising a motor shaft (8) with associated radially-polarized cylindrical permanent magnets which move in a reciprocating manner in a corresponding cavity of a stator (2) provided with excitation coils (6-7) and guiding and supporting bushes (9) for said motor shaft (8), the guiding and supporting bushes (9) of the motor shaft (8) being made of ceramic material and the motor shaft (8), at least in regions where it is in sliding contact with the bushes, being at least coated with one of the following materials: ceramic material, chromium, plasma.

2. The linear electric motor (1) according to claim 1, **characterized in that** said ceramic material is selected among materials comprising at least aluminum oxide and zirconium oxide.

3. The linear electric motor (1) according to claim 1, **characterized in that** each guiding and supporting bush (9) of the motor shaft (8) is constituted by a body (13) made of plastics in which ceramic rings (9') are partially embedded, the corresponding shaft portion (8) being able to slide therein with a very precise mutual sliding coupling.

4. The linear electric motor according to claim 4, **characterized in that** the body (13) of the guiding and supporting bush (9) of the motor shaft (8) is made of thermoplastic material.

5. The linear electric motor (1) according to the preceding claims, **characterized in that** the outer surface of the motor shaft (8), at least at the portions engaged by, and cooperating with, the guiding and supporting bushes (9), is smoothed and has a maximum roughness between 0.3 and 0.4 microns, and the internal surface of the ceramic rings (9') of said guiding and supporting bushes (9) is ground and has a maximum roughness of 1 micron.

## Patentansprüche

1. Elektrischer Linearmotor (1) zur Betätigung von Schussfaden-Bremsvorrichtungen insbesondere für Webmaschinen, der einen Motorschaft (8) mit zugehörigen radial polarisierten zylindrischen Permanentmagneten aufweist, die sich auf eine hin- und hergehende Weise in einem entsprechenden Hohlraum eines Stators (2) bewegen, der mit Erregerspulen (6 und 7) und Führungs- und Stützbuchsen (9) für den Motorschaft (8) versehen ist, wobei die Führungs- und Stützbuchsen (9) des Motorschaftes (8) aus Keramikmaterial bestehen und der Motorschaft (8) mindestens in Bereichen, in denen er mit den Buchsen in Gleitkontakt steht, mit einem der folgenden Materialien beschichtet ist: Keramikmaterial, Chrom, Plasma.

2. Elektrischer Linearmotor (1) nach Anspruch 1, **dadurch gekennzeichnet, dass** das Keramikmaterial unter Materialien ausgewählt ist, die mindestens Aluminiumoxid und Zirkonoxid umfassen.

3. Elektrischer Linearmotor (1) nach Anspruch 1, **dadurch gekennzeichnet, dass** jede Führungs- und Stützbuchse (9) des Motorschaftes (8) durch einen Körper (13) aus Kunststoff gebildet wird, worin Keramikringe (9') teilweise eingebettet sind, wobei der entsprechende Schaftabschnitt (8) mit einer sehr präzisen gegenseitigen Gleitkopplung darin gleiten kann.

4. Elektrischer Linearmotor (1) nach Anspruch 4, **dadurch gekennzeichnet, dass** der Körper (13) der Führungs- und Stützbuchse (9) des Motorschaftes (8) aus thermoplastischem Material besteht.

5. Elektrischer Linearmotor (1) nach den vorhergehenden Ansprüchen, **dadurch gekennzeichnet, dass** die Außenfläche des Motorschaftes (8) mindestens in den Abschnitten, die mit den Führungs- und Stützbuchsen (9) in Eingriff stehen und zusammenwirken, geglättet ist und eine maximale Rauigkeit zwischen 0,3 und 0,4 Mikron hat, und dass die Innenfläche der Keramikringe (9') der Führungs- und Stützbuchsen (9) geschliffen ist und eine maximale Rauigkeit von 1 Mikron hat.

## Revendications

1. Moteur électrique linéaire (1) pour actionner des dispositifs de freinage de trame particulièrement pour des métiers à tisser, comprenant un arbre moteur (8) avec des aimants permanents cylindriques associés polarisés radialement qui se déplacent d'une manière alternative dans une cavité correspondante d'un stator (2) muni de bobines d'excitation (6-7) et de douilles de guidage et de support (9) pour ledit arbre moteur (8), les douilles de guidage et de support (9) de l'arbre moteur (8) étant réalisées en matière céramique et l'arbre moteur (8), au moins dans des régions où il est en contact glissant avec les douilles, étant au moins revêtu d'une des matières suivantes : matière céramique, chrome, plasma.

2. Moteur électrique linéaire (1) selon la revendication 1,
**caractérisé en ce que** ladite matière céramique est choisie parmi des matières comprenant au moins un oxyde d'aluminium et un oxyde de zirconium.

3. Moteur électrique linéaire (1) selon la revendication 1,
**caractérisé en ce que** chaque douille de guidage et de support (9) de l'arbre moteur (8) est constituée par un corps (13) réalisé en matière plastique dans lequel des bagues en céramique (9') sont partiellement intégrées, la partie correspondante de l'arbre (8) étant capable de coulisser dans celles-ci avec un ajustement glissant mutuel très précis.

4. Moteur électrique linéaire selon la revendication 4,
**caractérisé en ce que** le corps (13) de la douille de guidage et de support (9) de l'arbre moteur (8) est réalisé en matière thermoplastique.

5. Moteur électrique linéaire (1) selon les revendications précédentes,
**caractérisé en ce que** la surface externe de l'arbre moteur (8), au moins au niveau des portions engagées par les douilles de guidage et de support (9) et coopérant avec celles-ci, est lisse et présente une rugosité maximale entre 0,3 et 0,4 micromètre, et la surface interne des bagues en céramique (9') desdites douilles de guidage et de support (9) est rectifiée et présente une rugosité maximale de 1 micromètre.
